Europäisches Patentamt

European Patent Office

Office européen des brevets

(11) Numéro de publication: **0 201 373 B1**

# (12) FASCICULE DE BREVET EUROPEEN

(45) Date de publication du fascicule du brevet:
27.12.90

(51) Int. Cl.⁵: **H04N 5/243**

(21) Numéro de dépôt: 86400686.1

(22) Date de dépôt: 28.03.86

(54) **Dispositif photosensible à temps de pose ajustable localement.**

(30) Priorité: 05.04.85 FR 8505254

(43) Date de publication de la demande:
17.12.86 Bulletin 86/46

(45) Mention de la délivrance du brevet:
27.12.90 Bulletin 90/52

(84) Etats contractants désignés:
DE FR GB NL

(56) Documents cités:
US-A- 4 335 405

PATENTS ABSTRACTS OF JAPAN,
vol. 6, no. 176 (E.130)[1054], 10 septembre 1982; & JP - A
- 57 93 782

(73) Titulaire: THOMSON-CSF, 51, Esplanade du Général de
Gaulle, F-92800 Puteaux(FR)

(72) Inventeur: Chautemps, Jacques, THOMSON-CSF
SCPI 19, avenue de Messine, F-75008 Paris(FR)

(74) Mandataire: Mayeux, Michèle et al, THOMSON-CSF
SCPI, F-92045 PARIS LA DEFENSE CEDEX 67(FR)

**Description**

La présente invention concerne un dispositif photosensible à temps de pose ajustable localement.

Il est connu dans l'art antérieur de réaliser des dispositifs photosensibles dont le temps de pose est ajustable globalement pour l'ensemble du dispositif. C'est le cas par exemple dans la demande de brevet français n° 82.20762, déposée le 10 Décembre 1982 au nom de THOMSON-CSF, et publiée sous le numéro FR-A 2.499.866. C'est la cas également dans le brevet américain US-A 4.335.405 et dans le brevet japonais JP-A 57.93.782.

Ces dispositifs ne donnent pas entièrement satisfaction dans de nombreuses applications où les scènes analysées comportent une grande dynamique d'éclairement.

C'est le cas par exemple lorsqu'on analyse un paysage en contre-jour ou un objet opaque sur un fond clair.

On choisit en général de favoriser soit la zone claire, soit la zone sombre, ce qui fait perdre une partie de l'information de l'autre zone.

Par exemple, si l'on ouvre le diaphragme de l'objectif pour analyser une zone sombre, la zone claire devient alors saturée. L'utilisation d'un dispositif anti-éblouissement ne permet pas de résoudre ce problème car il provoque la perte par écrêtage d'une partie de l'information correspondant à la zone claire.

Si au contraire on ferme le diaphragme pour analyser une zone très éclairée , l'information provenant de la zone sombre est en partie inexploitable.

La présente invention permet de résoudre les problèmes précédemment énoncés et propose un dispositif photosensible comportant au moins une ligne de détecteurs photosensibles, caractérisé en ce qu'il comporte des moyens assurant une modification locale du temps d'intégration, pour certains détecteurs, en fonction de l'éclairement reu par chaque détecteur.

D'autres objets, caractéristiques et résultats de l'invention ressortiront de la description suivante, donnée à titre d'exemple non limitatif et illustrée par les figures annexées qui représentent :

- les figures 1,3 et 6, trois modes de réalisation de dispositifs photosensibles selon l'invention ;
- les figures 2a, b et c, 4a à e, 5a à f et 7a à h, des signaux de commande des dispositifs des figures 1, 3 et 6 ;
- la figure 8, un mode de réalisation du circuit de commande des dispositifs des figures 1, 3 et 6.

Sur les différentes figures, les mêmes repères désignent les mêmes éléments, mais, pour des raisons de clarté, les cotes et proportions des divers éléments ne sont pas respectées.

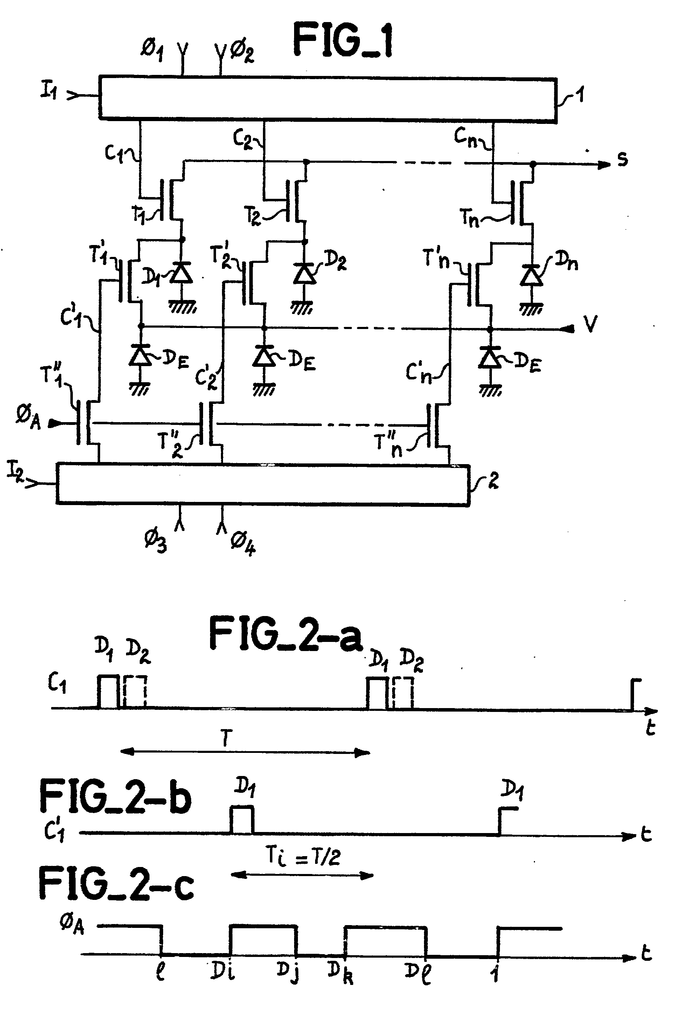

La figure 1 concerne un mode de réalisation d'un dispositif photosensible selon l'invention.

Dans le mode de réalisation de la figure 1, on a représenté une barrette de détecteurs photosensibles, qui ne comporte qu'une seule ligne de détecteurs $D_1$ à $D_n$, des photo-diodes par exemple.

Un registre à décalages 1, à entrée série et sorties parallèles permet d'adresser séquentiellement chaque détecteur. Il peut s'agir par exemple d'un registre à décalage logique, qui fonctionne avec deux signaux d'horloge $\emptyset_1$ et $\emptyset_2$. On entre dans ce registre une impulsion $I_1$ qui est transférée d'une sortie du registre à la suivante avec une période T.

Dans le mode de réalisation de la figure 1, chaque sortie du registre adresse la grille d'un transistor MOS, référencé $T_1$, $T_2$...$T_n$.

Une deuxième électrode de ces transistors MOS est reliée à un détecteur, tandis que leur troisième électrode constitue la sortie S du dispositif.

Cette sortie S permet de lire la quantité de charge stockée par chaque détecteur adressé. Cette quantité de charge est proportionnelle à l'éclairement reu pendant le temps d'intégration.

Par ailleurs, chaque détecteur est relié à des moyens assurant une modification locale du temps d'intégration, qui sont constitués par des transistors MOS $T'_1$, $T'_2$...$T'_n$ reliés par l'une de leurs électrodes à un détecteur $D_1$, $D_2$...$D_n$, par une autre électrode à une diode d'évacuation des charges $D_E$ polarisée à un potentiel constant V. La grille des transistors MOS $T'_1$ à $T'_n$ est commandée par une électrode des transistors MOS $T''_1$ à $T''_n$, dont les grilles reçoivent un même signal de commande $\emptyset_A$ et dont une autre électrode est reliée à une sortie d'un deuxième registre à décalages 2. Ce registre, à entrée série et sorties parallèles, est commandé par des signaux d'horloge $\emptyset_3$ et $\emptyset_4$ et reçoit sur son entrée une information $I_2$ qui est véhiculée d'une sortie du registre à la suivante.

Le fonctionnement du dispositif de la figure 1 est le suivant.

Le registre 1 fonctionne à une fréquence telle que la période de lecture des détecteurs égale T. Sur la figure 2a, on a représenté le signal de commande $C_1$ reçu par la grille du transistor $T_1$. Ce signal $C_1$ est périodique de période T. C'est donc avec une période T que les charges stockées par le détecteur $D_1$ sont évacuées vers la sortie S après avoir traversé le transistor MOS $T_1$.

Le signal de commande $C_2$ appliqué au transistor $T_2$ relié au détecteur $C_2$ est représenté en pointillés sur la figure 2a. Il est légèrement décalé dans le temps par rapport au signal $C_1$.

Sur la figure 2b, on a représenté le signal de commande $C'_1$ appliqué au transistor $T'_1$ également relié au détecteur $D_1$.

Dans l'exemple des figures 2a, b et c, le registre 2 fonctionne à la même fréquence que le registre 1, mais l'information $I_2$ est décalée de T/2 par rapport à l'information $I_1$. Le temps de pose, c'est-à-dire le temps d'intégration $T_i$ du détecteur $D_1$, égale alors T/2.

Après un temps égal à T/2, les charges stockées dans le détecteur $D_1$ sont évacuées dans une diode $D_E$ portée au potentiel V. Ce sont donc les charges stockées pendant un temps d'intégration égal à T/2 qui seront lues sur la sortie S. Le signal $\emptyset_A$ est porté au niveau haut de façon à transmettre le signal $C'_1$ au bon moment.

Sur la figure 2c, on a représenté à titre d'exemple

le signal $\emptyset_A$ au niveau haut alors que l'impulsion $I_2$ est en regard des détecteurs $D_i$ à $D_j$ et des détecteurs $D_k$ à $D_l$. Le temps d'intégration n'est donc divisé par deux que pour ces détecteurs-là, et pas pour les détecteurs intermédiaires $D_j$ à $D_k$. On réalise donc un temps de pose ajustable localement pour des groupes de détecteurs.

Il est possible lorsque tous les détecteurs ont été lus de les remettre à un même potentiel en appliquant ce potentiel à la connexion de sortie S entre deux adressages du registre 1.

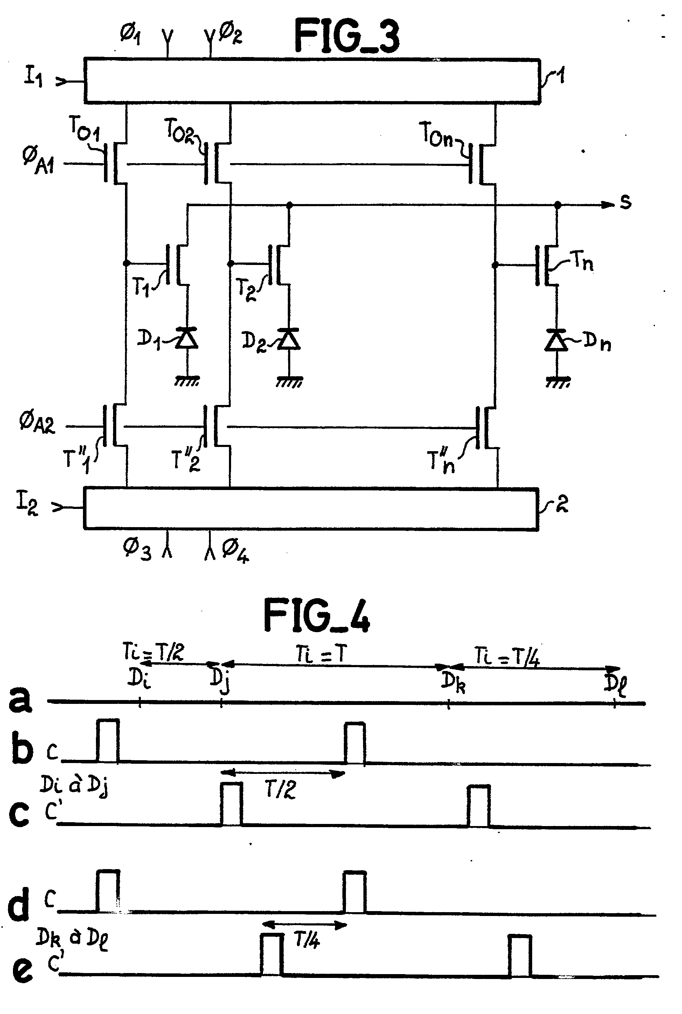

Sur la figure 3, on a représenté un mode de réalisation légèrement différent de celui de la figure 1.

Dans ce mode de réalisation, les transistors MOS $T_1$, $T_2$...$T_n$ qui commandent les détecteurs $D_1$ à $D_n$ peuvent être adressés par l'un ou l'autres des registres 1 et 2, par l'intermédiaire de transistors MOS $T_{o1}$ à $T_{on}$ et $T''_1$ à $T''_n$ qui reçoivent sur leurs grilles respectivement les signaux de commande $\emptyset_{A1}$ et $\emptyset_{A2}$.

Sur la connexion de sortie S, on trouve une alternance d'informations utiles et non utiles. En effet, lorsqu'un détecteur est relié à la connexion S c'est soit pour être lu, soit pour l'évacuation des charges qu'il a stockées afin de commencer une nouvelle période d'intégration.

Les signaux de commande $\emptyset_{A1}$ et $\emptyset_{A2}$ sont sensiblement en opposition de phase. Comme dans le cas de la figure 1, pour obtenir pour certains détecteurs un temps d'intégration égal à T/2, on peut utiliser des signaux $\emptyset_1$, $\emptyset_2$, $\emptyset_3$ et $\emptyset_4$ de même période et des informations $I_1$ et $I_2$ décalées de T/2.

Par rapport à celui de la figure 1, le dispositif de la figure 3 présente l'avantage d'utiliser le même chemin pour l'évacuation des charges parasites et pour celle des charges signal ce qui permet de diminuer le bruit spatial.

Les dispositifs des figures 1 et 3 permettent de réaliser plusieurs temps d'intégration différents.

Par exemple si les détecteurs $D_i$ à $D_j$ reçoivent deux fois trop de lumière, c'est-à-dire environ deux fois le niveau de saturation et si les détecteurs $D_k$ à $D_l$ reçoivent quatre fois trop de lumière, on cherche à obtenir un temps d'intégration de T/2 pour les détecteurs $D_i$ à $D_j$, de T/4 pour les détecteurs $D_k$ à $D_l$, alors que le temps d'intégration reste égal à T pour les autres détecteurs.

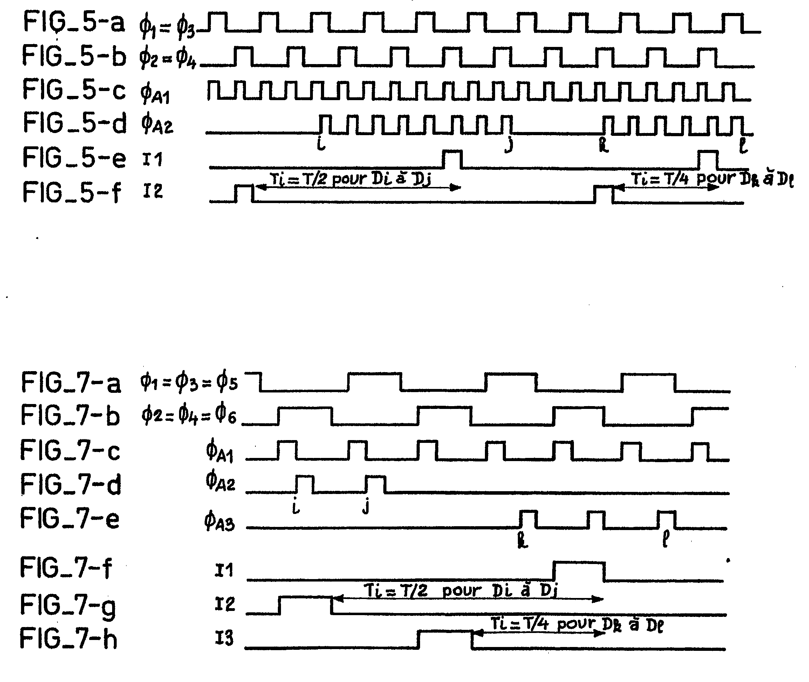

Sur la figure 4a, on a représenté symboliquement les divers groupes de détecteurs avec leurs temps d'intégration : $T_i$ = T/2 pour les détecteurs $D_i$ à $D_j$, $T_i$ = T pour les détecteurs $D_j$ à $D_k$ et $T_i$ = T/4 pour les détecteurs $D_k$ à $D_l$.

Sur les figures 4b à e, on a représenté, en prenant pour exemple le mode de réalisation de la figure 1, les signaux de commande C et C' appliqués aux détecteurs $D_i$ à $D_j$ et $D_k$ à $D_l$ pour avoir les temps d'intégration souhaités. En ce qui concerne les détecteurs $D_j$ à $D_k$ dont le temps d'intégration égale T, il suffit de mettre le signal $\emptyset_A$ au niveau bas.

Il est possible pour obtenir les temps d'intégration T/2 et T/4 de modifier la période des signaux d'horloge $\emptyset_3$ et $\emptyset_4$ du registre 2.

Ainsi par exemple, entre les détecteurs $D_j$ et $D_k$

on peut stopper les signaux d'horloge $\emptyset_3$ et $\emptyset_4$. Après le détecteur $D_l$, on transfère l'information $I_2$ très rapidement dans le registre 2 pour revenir à un temps d'intégration de T/2 pour le détecteur $D_i$.

Les détecteurs $D_l$ et $D_i$ ne peuvent pas être voisins si l'on veut pouvoir passer d'un temps d'intégration de T/4 à un temps d'intégration de T/2.

La distance minimale en nombre de détecteurs entre les détecteurs $l$ et $i$ égale :

$n.(T/4 + n.t_{min}). 1/T$

où n est le nombre total de détecteurs et où $t_{min}$ est le temps minimum pour transférer l'information $I_2$ d'un étage du registre 2 au suivant.

Sur les figures 5a à f, on a représenté, dans le cas du mode de réalisation de la figure 3, les signaux que l'on peut utiliser pour obtenir un temps d'intégration $T_i$ = T/2 pour les détecteurs $D_i$ à $D_j$, $T_i$ = T pour les détecteurs $D_j$ à $D_k$ et $T_i$ = T/4 pour les détecteurs $D_k$ à $D_l$.

Le signal $\emptyset_1$ est choisi identique au signal $\emptyset_3$ et le signal $\emptyset_2$ identique au signal $\emptyset_4$. La figure 5a représente les signaux $\emptyset_1$ et $\emptyset_3$ et la figure 5b, les signaux $\emptyset_2$ et $\emptyset_4$. Les signaux $\emptyset_1$ et $\emptyset_3$ sont sensiblement en opposition de phase avec les signaux $\emptyset_2$ et $\emptyset_4$.

Sur les figures 5c et 5d, on a représenté les signaux de commande $\emptyset_{A1}$ et $\emptyset_{A2}$ qui sont sensiblement en opposition de phase, pendant les intervalles de temps où l'impulsion $I_2$ est en regard des détecteurs $D_i$ à $D_j$ et $D_k$ à $D_l$.

Pendant l'intervalle de temps ou l'impulsion $I_2$ est en regard des détecteurs $D_j$ à $D_k$, le signal $\emptyset_{A2}$ est au niveau bas en permanence. Pour les détecteurs $D_j$ à $D_k$, le temps d'intégration égale T.

Sur les figures 5e et f, on a représenté les informations $I_1$ et $I_2$.

Les informations $I_1$ et $I_2$ sont décalés de T/2 lorsqu'on traite les détecteurs $D_i$ à $D_j$ et elles sont décalées de T/4 lorsqu'on traite les détecteurs $D_k$ à $D_l$.

Une autre possibilité pour obtenir les temps d'intégration T/2 et T/4 est d'utiliser un troisième registre à décalages 3 comme cela est représenté sur la figure 6, dans le cas du mode de réalisation de la figure 3. Ce registre 3 reçoit une information $I_3$ et des signaux d'horloge $\emptyset_5$ et $\emptyset_6$. Des transistors MOS $T'_{o1}$ à $T'_{on}$ relient les sorties de ce registre aux grilles de commande des transistors MOS $T_1$ à $T_n$.

On peut de la même façon utiliser un troisième registre 3 dans le cas du dispositif de la figure 1. Ce troisième registre est connecté au dispositif dans la même façon que le deuxième registre à décalages 2.

Les figures 7a à h représentent les signaux de commande que l'on peut utiliser dans le cas du dispositif de la figure 6.

Les signaux $\emptyset_1$, $\emptyset_3$ et $\emptyset_5$, représentés sur la figure 7a, sont identiques. Il en est de même pour les signaux $\emptyset_2$, $\emptyset_4$ et $\emptyset_6$ représentés sur la figure 7b. Les signaux $\emptyset_1$, $\emptyset_3$ et $\emptyset_5$ sont sensiblement en opposition de phase avec les signaux $\emptyset_2$, $\emptyset_4$ et $\emptyset_6$.

Sur les figures 7c, d et e, on a représenté les signaux $\emptyset_{A1}$, $\emptyset_{A2}$ et $\emptyset_{A3}$.

Pendant le traitement des détecteurs $D_i$ à $D_j$, les signaux $\emptyset_{A1}$ et $\emptyset_{A2}$ sont sensiblement en opposition de phase. Le signal $\emptyset_{A2}$ est eu niveau bas pendant le traitement des autres détecteurs.

De même, les signaux $\emptyset_{A1}$ et $\emptyset_{A3}$ sont sensiblement en opposition de phase pendant le traitement des détecteurs $D_k$ à $D_l$. Le signal $\emptyset_{A3}$ est au niveau bas pendant le traitement des autres détecteurs.

En conséquence les détecteurs $D_j$ à $D_k$, pendant le traitement desquels les signaux $\emptyset_{A2}$ et $\emptyset_{A3}$ sont au niveau bas ont un temps d'intégration égal à T.

Sur les figures 7f, g et h, on a représenté les informations $l_1$, $l_2$ et $l_3$.

Les informations $l_1$ et $l_2$ sont décalées de T/2 lorsqu'on traite les détecteurs $D_i$ à $D_j$ et les informations $l_1$ et $l_3$ sont décalées de T/4 lorsqu'on traite les détecteurs $D_k$ à $D_l$.

En conséquence, les détecteurs $D_i$ à $D_j$ ont un temps d'intégration égal à T/2 et les détecteurs $D_k$ à $D_l$ ont un temps d'intégration égal à T/4.

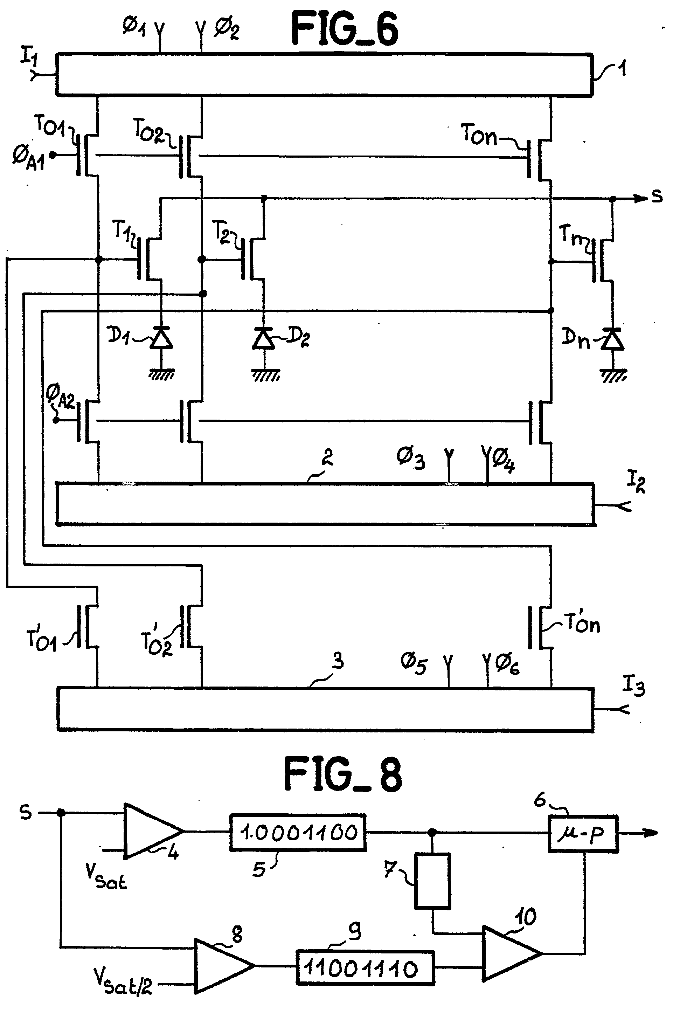

Sur la figure 8, on a représenté un mode de réalisation du circuit de commande des dispositifs des figures 1, 3 et 5.

On compare le signal de sortie S pour chaque détecteur au seuil de saturation $V_{Sat}$ à l'aide d'un amplificateur différentiel 4 par exemple.

On attribue par exemple un 1 si S est supérieur à $V_{Sat}$ et un O dans le cas contraire.

On stocke dans une mémoire 5 le résultat de ces comparaisons.

La sortie de cette mémoire 5 est reliée à un microprocesseur 6 qui réalise la commande des signaux $\emptyset_1$, $\emptyset_2$, $\emptyset_3$, $\emptyset_4$ ... et des informations $l_1$, $l_2$... transférées dans les registres.

Pour les détecteurs qui se voient attribuer un 1 le temps d'intégration passe à T/2.

Le résultat des comparaisons entre les signaux S et $V_{Sat}$ est également stocké dans une autre mémoire 7.

Dès cette première lecture du signal de sortie S, un amplificateur différentiel 8 permet de comparer le signal de sortie S à $V_{Sat/2}$. Cette comparaison n'est utilisée qu'à partir de la deuxième lecture. Le résultat de cette comparaison est stocké dans une mémoire 9. On peut par exemple attribuer un 1 si le signal S est inférieur à $V_{Sat/2}$ et un O dans le cas contraire.

Un troisième amplificateur différentiel 10 a ses entrées reliées aux mémoires 7 et 9 et sa sortie au micro-processeur 6.

Lors de la deuxième lecture du signal de sortie S des détecteurs, on examine comment se situe le signal de sortie S des détecteurs dont le temps d'intégration a été précédemment porté à T/2 :
- si leur signal de sortie S est encore supérieur à $V_{Sat}$, leur temps d'intégration devient égal à T/4 ;
- si leur signal de sortie S est devenu inférieur à $V_{Sat/2}$, leur temps d'intégration devient égal à T.

On peut bien sûr concevoir des circuits de commande plus élaborés où l'on fait intervenir d'autres tensions de référence par exemple $V_{Sat/4}$, $3V_{Sat/4}$... et d'autres temps d'intégration par exemple T/4, 3 T/4...

Le dispositif selon l'invention a été décrit dans le cas de barrettes de détecteurs. Il peut s'agir par exemple de photo-diodes ou de photo-MOS. L'invention est bien sûr applicable dans le cas de matrices photosensibles constituées de plusieurs lignes de détecteurs.

On peut alors traiter chaque ligne de la matrice comme une barrette de détecteurs ou traiter globalement les lignes.

## Revendications

1. Dispositif photosensible comportant au moins une ligne de détecteurs photosensibles ($D_1$, $D_2$...$D_n$), caractérisé en ce qu'il comporte des moyens assurant une modification locale du temps d'intégration, pour certains détecteurs, en fonction de l'éclairement reçu par chaque détecteur.

2. Dispositif selon la revendication 1, caractérisé en ce qu'il comporte un registre à décalage à entrée série et à sorties parallèles (1) reliées aux détecteurs ($D_1$, $D_2$...$D_n$) d'une même ligne de détecteurs par l'intermédiaire de transistors MOS.

3. Dispositif selon la revendication 2, caractérisé en ce que ces transistors MOS ($T_1$, $T_2$...n) ont leur grille reliée à une sortie du registre, et sont reliés par ailleurs à un détecteur ($D_1$, $D_2$...$D_n$) et à la sortie (S) du dispositif.

4. Dispositif selon la revendication 3, caractérisé en ce que les moyens assurant une modification locale du temps d'intégration sont constitués par un deuxième registre à décalages à entrée série et sorties parallèles (2), dont les sorties commandent une électrode d'une série de transistors MOS ($T''_1$, $T''_2$...$T''_n$), dont les grilles reçoivent le même signal de commande ($\phi_A$) et dont une autre électrode commande les grilles d'une autre série de transistors MOS ($T'_1$, $T'_2$...$T'_n$), qui sont connectés à un détecteur ($D_1$, $D_2$...$D_n$) et à une diode d'évacuation des charges portée à un potentiel constant (V).

5. Dispositif selon la revendication 2, caractérisé en ce qu'une première série de transistors MOS ($T_1$, $T_2$...$T_n$) est reliée entre les détecteurs ($D_1$, $D_2$...$D_n$) et la sortie (S) du dispositif, en ce qu'une deuxième série de transistors MOS ($T_{01}$, $T_{02}$...$T_{0n}$) est reliée entre chaque sortie du registre (1) et la grille d'un transistor MOS de la première série ($T_1$, $T_2$...$T_n$), les transistors MOS de la deuxième série ($T_{01}$, $T_{02}$...$T_{0n}$) recevant sur leur grille le même signal de commande ($\phi_{A1}$) et en ce que les moyens assurant une modification locale du temps d'intégration sont constitués par un deuxième registre à décalages (2) à entrée série et sorties parallèles, et par une troisième série de transistors MOS ($T''_1$, $T''_2$...$T''_n$), reliés entre l'une des sorties du deuxième registre et la grille d'un transistor MOS de la première série ($T_1$, $T_2$, ...$T_n$) et dont la grille reçoit un même signal de commande ($\phi_{A2}$).

6. Dispositif selon l'une des revendications 4 ou 5, caractérisé en ce que les moyens assurant une modification locale du temps d'intégration comportent un troisième registre à décalages (3), à entrée série et sorties parallèles, connecté au dispositif de la même façon que le deuxième registre à décalages (2).

7. Dispositif selon l'une des revendications 4 à 6, caractérisé en ce que le ou les registres à décalages (2, 3) des moyens assurant une modification locale du temps d'intégration sont commandés par un circuit de commande qui détermine le temps d'intégration de chaque détecteur ($D_1$, $D_2$...$D_n$) par comparaison de son signal de sortie (S) avec un signal de référence tel que le niveau de saturation ($V_{Sat}$), le demi-niveau de saturation ($V_{Sat/2}$) des détecteurs.

**Claims**

1. A photosensitive device comprising at least one line of photosensitive detectors ($D_1$, $D_2$...$D_n$), characterized in that it comprises means ensuring a local modification of the integration time, for certain detectors, as a function of the illumination received at each detector.

2. The device as claimed in claim 1, characterized in that it comprises a shift register with a series input and with parallel outputs (1) connected with the detectors ($D_1$, $D_2$...$D_n$) of a given line of detectors by the intermediary of MOS transistors.

3. The device as claimed in claim 2, characterized in that the said MOS transistors ($T_1$, $T_2$...$T_n$) have their grids connected with one output of the register and are further connected to a detector ($D_1$, $D_2$...$D_n$) and the output (S) of the device.

4. The device as claimed in claim 3, characterized in that the means ensuring the local modification of the integration time are constituted by a second shift register with a series input and parallel outputs (2), whose outputs drive one electrode of a series of MOS transistors ($T''_1$, $T''_2$...$T''_n$), whose grids receive the same control signal ($\phi_A$) and of which another electrode drives the grids of another series of MOS transistors ($T'_1$, $T'_2$...$T'_n$) which are connected with a detector ($D_1$, $D_2$...$D_n$) and a charge clearing diode placed at a constant potential (V).

5. The device as claimed in claim 2, characterized in that a first series of MOS transistors ($T_1$, $T_2$...$T_n$) is connected between the detectors ($D_1$, $D_2$...$D_n$) and the output (S) of the device, in that a second series of MOS transistors ($T_{01}$, $T_{02}$...$T_{0n}$) is connected between each output of the register (1) and the grid of an MOS transistor of the first series ($T_1$, $T_2$...$T_n$), the MOS transistors of the second series ($T_{01}$, $T_{02}$...$T_{0n}$) receiving at their grids the same control signal ($\phi_{A1}$) and in that the means ensuring local modification of the integration time are constituted by a second shift register (2) with a series input and parallel outputs, and by a third series of MOS transistors ($T''_1$, $T''_2$...$T''_n$) connected between one of the outputs of the second register and the grid of an MOS transistor of the first series ($T_1$, $T_2$...$T_n$) and whose grid receives a same control signal ($\phi_{A2}$).

6. The device as claimed in claim 4 or claim 4, characterized in that the means ensuring a local modification of the integration time comprise a third shift register (3), with a series input and parallel outputs, connected to the device in the same manner as the second shift register (2).

7. The device as claimed in any one of the preceding claims 4 through 6, characterized in that the shift register or shift registers (2 and 3) of the means ensuring a local modification of the integration time are controlled by a control circuit which sets the integration time of each detector ($D_1$, $D_2$...$D_n$) by comparison of its outputs signal (S) with the reference signal such as the saturation level ($V_{Sat}$), half the level of saturation ($V_{Sat/2}$) of the detectors, etc.

**Patentansprüche**

1. Lichtempfindliche Vorrichtung, mit wenigstens einer Reihe von lichtempfindlichen Detektoren ($D_1$, $D_2$, ..., $D_n$), dadurch gekennzeichnet, daß sie Mittel umfaßt, die in Abhängigkeit der von jedem Detektor empfangenen Beleuchtungsstärke eine auf bestimmte Detektoren lokalisierte Veränderung der Integrationszeit gewährleisten.

2. Vorrichtung gemäß Anspruch 1, gekennzeichnet durch ein Schieberegister (1) mit einem seriellen Eingang und parallelen Ausgängen, die über dazwischengeschaltete MOS-Transistoren mit Detektoren ($D_1$, $D_2$, ..., $D_n$) derselben Detektorreihe verbunden sind.

3. Vorrichtung gemäß Anspruch 2, dadurch gekennzeichnet, daß diese MOS-Transistoren ($T_1$, $T_2$, ..., $T_n$) jeweils mit ihrem Gate mit einem Ausgang des Registers und andererseits mit einem Detektor ($D_1$, $D_2$, ..., $D_n$) und mit dem Ausgang (S) der Vorrichtung verbunden sind.

4. Vorrichtung gemäß Anspruch 3, dadurch gekennzeichnet, daß die eine lokale Veränderung der Integrationszeit gewährleistenden Mittel von einem zweiten Schieberegister (2) mit einem seriellen Eingang und mit parallelen Ausgängen gebildet werden, wobei die Ausgänge des Schieberegisters jeweils eine Elektrode einer Reihe von MOS-Transistoren ($T''_1$, $T''_2$, ..., $T''_n$) steuern, deren Gates das gleiche Steuersignal ($\phi_A$) und deren jeweils andere Elektroden die Gates einer anderen Reihe von MOS-Transistoren ($T'_1$, $T'_2$, ..., $T'_n$) steuern, die jeweils mit einem Detektor ($D_1$, $D_2$, ..., $D_n$) und mit einer auf konstantem Potential (V) gehaltenen Ladungsabführungsdiode verbunden sind.

5. Vorrichtung gemäß Anspruch 2, dadurch gekennzeichnet, daß eine erste Reihe von MOS-Transistoren ($T_1$, $T_2$, ..., $T_n$) zwischen die Detektoren ($D_1$, $D_2$, ..., $D_n$) und den Ausgang (S) der Vorrichtung geschaltet ist und daß eine zweite Reihe von MOS-Transistoren ($T_{01}$, $T_{02}$, ..., $T_{0n}$) jeweils zwischen einen Ausgang des Registers (1) und das Gate eines MOS-Transistors der ersten Reihe ($T_1$, $T_2$, ..., $T_n$) geschaltet ist, wobei die MOS-Transistoren der zweiten Reihe ($T_{01}$, $T_{02}$, ..., $T_{0n}$) an ihrem Gate das gleiche Steuersignal ($\phi_{A1}$) empfangen, und daß die eine lokale Veränderung der Integrationszeit gewährleistenden Mittel von einem zweiten Schieberegister (2) mit einem seriellen Eingang und mit parallelen Ausgängen und von einer dritten Reihe von MOS-Transistoren ($T''_1$, $T''_2$, ..., $T''_n$), die zwischen jeweils einen der Ausgänge des zweiten Registers und das Gate eines MOS-Transistors der ersten Reihe ($T_1$, $T_2$, ..., $T_n$) geschaltet sind und deren Gate jeweils das gleiche Steuersignal ($\phi_{A2}$) empfängt, gebildet werden.

6. Vorrichtung gemäß einem der Ansprüche 4 oder 5, dadurch gekennzeichnet, daß die eine lokale Veränderung der Integrationszeit gewährleistenden Mittel ein drittes Schieberegister (3) mit einem seriellen Eingang und mit parallelen Ausgängen umfassen, das mit der Vorrichtung auf die gleiche Weise wie das zweite Schieberegister (2) verbunden ist.

7. Vorrichtung gemäß einem der Ansprüche 4 bis 6, dadurch gekennzeichnet, daß das oder die Schieberegister (2, 3) der eine lokale Veränderung der Integrationszeit gewährleistenden Mittel von einer Steuerschaltung gesteuert werden, die die Integrationszeit eines jeden Detektors ($D_1$, $D_2$, ..., $D_n$) durch den Vergleich seines Ausgangssignals (S) mit einem Bezugssignal wie etwa das Sättigungsniveau ($V_{Sat}$) der Detektoren, das halbe Sättigungsniveau ($V_{Sat/2}$) der Detektoren usw. bestimmt.

FIG_1

FIG_2-a

FIG_2-b

FIG_2-c

# FIG_3

# FIG_4

FIG_5-a    $\phi_1 = \phi_3$

FIG_5-b    $\phi_2 = \phi_4$

FIG_5-c    $\phi_{A1}$

FIG_5-d    $\phi_{A2}$

FIG_5-e    I1

FIG_5-f    I2

$Ti = T/2$ pour $D_i$ à $D_j$

$Ti = T/4$ pour $D_k$ à $D_l$

FIG_7-a    $\phi_1 = \phi_3 = \phi_5$

FIG_7-b    $\phi_2 = \phi_4 = \phi_6$

FIG_7-c    $\phi_{A1}$

FIG_7-d    $\phi_{A2}$

FIG_7-e    $\phi_{A3}$

FIG_7-f    I1

FIG_7-g    I2

FIG_7-h    I3

$Ti = T/2$ pour $D_i$ à $D_j$

$Ti = T/4$ pour $D_k$ à $D_l$

EP 0 201 373 B1

# FIG_6

# FIG_8